# EUROPEAN PATENT APPLICATION

(11) **EP 4 804 393 A1**
(43) Date of publication of application: **09.09.2026**
(21) Application number: 26162491.0
(22) Date of filing: 05.03.2026
(51) Int. Cl.: H02M 1/00, H02M 3/00, H02M 3/28, H02M 3/335

(54) **RESONANT CONVERTER, POWER CONVERSION DEVICE INCLUDING SAME, AND DRIVING METHOD THEREOF**

(30) Priority: 06.03.2025 KR 20250028819
(71) Applicant: SOLUM CO., LTD., Gyeonggi-do 16914 (KR); Konkuk University Industrial Cooperation Corp, Seoul 05029 (KR)
(72) Inventor: KIM, Jong Woo, 02455 Seoul (KR); LEE, Yu Jin, 12916 Hanam-si, Gyeonggi-do (KR); JI, Sang Keun, 16955 Yongin-si, Gyeonggi-do (KR); RYU, Dong Kyun, 05555 Seoul (KR)
(74) Representative: BCKIP Part mbB

(57) **Abstract**

An embodiment may provide a resonant converter including: a first inverter and a second inverter connected in parallel with each other; a first resonant circuit connected to the first inverter; a second resonant circuit connected to the second inverter; a first transformer section connected to the first resonant circuit; a second transformer section connected to the second resonant circuit; a first rectifier section including a first secondary-side transformer section of the first transformer section; a second rectifier section including a second secondary-side transformer section of the second transformer section; and a relay section configured to control series or parallel connection of the first and second rectifier sections, wherein driving of switching elements in the first and second inverters and driving of the relay section are controlled on the basis of a voltage of a battery being charged.

## Description

### BACKGROUND

### Field

The present disclosure relates to a resonant converter, a power conversion device including the resonant converter, and a driving method thereof.

### Description of Related Art

The world is currently facing an unprecedented crisis due to climate change, and accordingly, global efforts to reduce carbon emissions are actively being undertaken. Electric Vehicles (EVs) can significantly reduce total carbon emissions compared to conventional internal combustion engine vehicles, and accordingly, they are attracting attention, together with renewable energy, as a key application area for addressing climate change. In line with this trend, major global automobile manufacturers are making substantial investments and developing technologies to secure a competitive advantage in the Electric Vehicle (EV) market. However, apart from the carbon emission reduction effect of electric vehicles, several challenges remain in achieving widespread adoption and market expansion. Among these challenges, the most urgent issue in the field of power electronics is the expansion and technical improvement of electric vehicle charging infrastructure. In fact, potential purchasers of electric vehicles are reported to hesitate to make a purchase due to a lack of charging stations and limited accessibility. Accordingly, the establishment of reliable and efficient electric vehicle charging infrastructure is emerging as an essential factor for accelerating the adoption of electric vehicles and promoting market growth.

A key requirement of modern electric vehicle charging infrastructure is a design that supports high-power fast charging. This is for maximizing user convenience by reducing the charging time of electric vehicles to a level similar to the refueling time of conventional internal combustion engine vehicles. Currently commercially available ultra-fast electric vehicle chargers provide a charging capacity of 300 kW or higher, and accordingly, it is possible to significantly reduce charging time.

In electric vehicle chargers, a resonant converter that can achieve high efficiency with a small number of components, particularly an LLC resonant converter, is mainly used. However, a high-power design requires a higher charging current at the same voltage, and this results in an increase in the magnitude of the sinusoidal current that is transferred to the output capacitor of a resonant converter. As a result, the current stress on the output capacitor increases, and this may increase heat generation of components inside the power conversion circuit and reduce their lifetime.

To solve this problem, a method has been proposed in which multiple resonant converters are connected in parallel and driven in an interleaving scheme by causing their operating phases to differ from one another. However, when variations in characteristics arise among converters due to tolerances in design variables that arise during the manufacturing process, a problem arises in which the output power of the converters is asymmetrically distributed. To address this problem, a complex control technique including additional duty ratio control in addition to the existing frequency modulation scheme is required. Such additional control not only increases system complexity and cost, but may also adversely affect reliability. Therefore, there is a need for the development of a technology that can uniformly distribute the output power of multiple resonant converters and minimize current stress on an output capacitor even without additional control.

Further, electric vehicle charging infrastructure must have versatility that makes it possible to accommodate various electric vehicle models. Existing electric vehicles primarily use 400 V batteries and operate within a voltage variation range of approximately 150 V to 500 V. However, adoption of 800 V batteries is increasing due to growing demand for high-power charging and efforts to reduce the weight of vehicle internal wiring. An 800 V battery has a wide voltage variation range of approximately 300 V to 1000 V. Accordingly, a versatile power conversion circuit for electric vehicle charging must maintain high efficiency over a very wide output voltage range from 150 V to 1000 V. However, when a power conversion circuit is designed to operate over such a wide voltage range, system cost efficiency decreases due to efficiency degradation and increases in circuit size and complexity.

### [Prior Art Document]

### [Patent Document]

(Patent Document 0001) KR 102644445 B
(Patent Document 0002) KR 10-2022-0001923 A
(Patent Document 0003) KR 10-2016-0135958 A
(Patent Document 0004) KR 10-2322330 B
(Patent Document 0005) KR 10-2022-0002783 A

### SUMMARY

The present disclosure provides a resonant converter capable of accommodating diversity of the voltage that is input to a charger as the required voltage range in existing electric vehicle charging systems expands, a power conversion device including the resonant converter, and a driving method thereof.

Further, the present disclosure provides a resonant converter capable of solving a problem in which power distribution becomes uneven due to tolerances among converters in the existing method of connecting multiple single-phase converters in parallel, a power conversion device including the resonant converter, and a driving method thereof.

Further, the present disclosure provides a resonant converter capable of solving a problem in which current ripple flowing through an output capacitor increases in existing converters, a power conversion device including the resonant converter, and a driving method thereof.

Further, the present disclosure provides a resonant converter capable of accommodating various electric vehicle batteries by supporting a wide voltage variation of 150 to 1000 V in consideration of differences in battery voltage range used by conventional electric vehicles and next-generation electric vehicles, a power conversion device including the resonant converter, and a driving method thereof.

An embodiment may provide a resonant converter including: a first inverter and a second inverter connected in parallel with each other; a first resonant circuit connected to the first inverter; a second resonant circuit connected to the second inverter; a first transformer section connected to the first resonant circuit; a second transformer section connected to the second resonant circuit; a first rectifier section including a first secondary-side transformer section of the first transformer section; a second rectifier section including a second secondary-side transformer section of the second transformer section; and a relay section configured to control series or parallel connection of the first and second rectifier sections, wherein driving of switching elements in the first and second inverters and driving of the relay section are controlled on the basis of a voltage of a battery being charged.

In another aspect, there may be provided a resonant converter in which the first and second inverters are driven with a phase difference of 120 degrees between phases, so that the first and second inverters phase-shift resonant currents of the phases and transfer the phase-shifted resonant currents, thereby minimizing current ripple flowing through an output capacitor.

In another aspect, there may be provided a resonant converter in which the first and second secondary-side transformer sections are connected in a Y or Δ configuration.

In another aspect, there may be provided a resonant converter in which each of the first and second inverters includes three single-phase half-bridges connected in parallel.

In another aspect, there may be provided a resonant converter in which, during high-voltage battery charging, a half-bridge leg of any one phase in the first and second inverters is driven as a full-bridge inverter.

In another aspect, there may be provided a resonant converter in which, during high-voltage battery charging, the first and second rectifier sections are connected in series.

In another aspect, there may be provided a resonant converter in which, during medium-voltage battery charging, a half-bridge leg of any one phase in the first and second inverters is driven as a full-bridge inverter, and the first and second rectifier sections are connected in parallel.

In another aspect, there may be provided a resonant converter in which, during low-voltage battery charging, a half-bridge leg of any one phase in the first and second inverters is driven as a half-bridge inverter.

In another aspect, there may be provided a resonant converter in which, during low-voltage battery charging, the first and second rectifier sections are connected in parallel.

In another aspect, there may be provided a power conversion device including a resonant converter and a control unit, in which the control unit determines whether a battery is a high-voltage battery, a medium-voltage battery, and a low-voltage battery by detecting a voltage and a current of the battery, and the control unit adjusts a driving frequency of the first and second inverters and controls driving of the relay section, on the basis of the determination result.

An embodiment can provide a resonant converter that can uniformly distribute currents regardless of tolerances by connecting primary windings of a three-phase LLC converter in series and connecting secondary windings in Y or Δ, and that can maintain high efficiency by preventing current asymmetry even without additional control, a power conversion device including the resonant converter, and a driving method thereof.

Further, it is possible to provide a resonant converter that can satisfy battery voltage requirements of both existing and next-generation electric vehicles because it is possible to adjust an output to low voltage, medium voltage, and high voltage using only three relays, a power conversion device including the resonant converter, and a driving method thereof.

Further, it is possible to provide a resonant converter that is easily maintained and managed because it operates stably even without additional current balancing control or complex sensing and does not cause the problem of current asymmetry even when design tolerances occur, a power conversion device including the resonant converter, and a driving method thereof.

Further, it is possible to provide a resonant converter that can maximize energy efficiency by minimizing losses in a power conversion process by reducing current ripple flowing through an output capacitor of the resonant converter and that can alleviate a thermal management burden of a system by reducing heat generated during charging, a power conversion device including the resonant converter, and a driving method thereof.

Further, it is possible to provide a resonant converter that can be designed to be compact compared to the related art due to a high-efficiency design capable of supporting a wide frequency range, and that facilitates installation and operation of a charger because its size and weight can be reduced even under high-power conditions, a power conversion device including the resonant converter, and a driving method thereof.

### BRIEF DESCRIPTION OF THE DRAWING

FIG. 1 illustrates a resonant converter according to an embodiment of the present disclosure.
FIG. 2 is a block diagram of a power conversion device according to an embodiment of the present disclosure.
FIG. 3 is a circuit diagram of a resonant converter according to an embodiment of the present disclosure, in which three transformers of a three-phase inverter have a Y-connection configuration.
FIG. 4 illustrates switching control signals over time by a first control signal generation unit and relay control signals over time by a second control signal generation unit during high-voltage battery charging.
FIG. 5 illustrates secondary-side windings connected in series during high-voltage battery charging.
FIG. 6 illustrates switching control signals over time by the first control signal generation unit and relay control signals over time by the second control signal generation unit during medium-voltage battery charging.
FIG. 7 illustrates secondary-side windings connected in parallel during medium-voltage battery charging.
FIG. 8 illustrates switching control signals over time by the first control signal generation unit and relay control signals over time by the second control signal generation unit during low-voltage battery charging.
FIG. 9 illustrates secondary-side windings connected in parallel during low-voltage battery charging.
FIG. 10 illustrates a resonant converter according to various embodiments of the present disclosure.
FIG. 11 illustrates main waveforms when an output voltage is 1000 V during high-voltage battery charging.
FIG. 12 illustrates main waveforms when an output voltage is 600V during high-voltage battery charging.
FIG. 13 illustrates main waveforms when an output voltage is 500 V during medium-voltage battery charging.
FIG. 14 illustrates main waveforms when an output voltage is 300 V during medium-voltage battery charging.
FIG. 15 illustrates main waveforms when an output voltage is 250 V during medium-voltage battery charging.
FIG. 16 illustrates main waveforms when an output voltage is 250 V during low-voltage battery charging.
FIG. 17 illustrates main waveforms when an output voltage is 150 V during low-voltage battery charging.

### DETAILED DESCRIPTION

The present disclosure may undergo various modifications and may have various embodiments, and particular embodiments are intended to be illustrated in the drawings and described in detail in the following detailed description. The effects and features of the present disclosure, and methods for achieving them, will become apparent by referring to the embodiments described in detail below together with the drawings. However, the present disclosure is not limited to the embodiments disclosed below and may be implemented in various forms. In the following embodiments, terms such as "first" and "second" are used for the purpose of distinguishing one component from another rather than in a limiting sense. Further, singular forms are intended to include plural forms unless the context clearly indicates otherwise. Further, terms such as "include" or "have" indicate that the features or components described in the specification are present and do not preclude the possibility that one or more other features or components may be added. Further, in the drawings, components may be exaggerated or reduced in size for convenience of explanation. For example, the size and thickness of the components shown in the drawings are depicted arbitrarily for convenience of explanation and the present disclosure is not necessarily limited to what is illustrated.

Hereinafter, embodiments of the present disclosure are described in detail with reference to the accompanying drawings, and in the following description of the accompanying drawings, like reference numerals are given to like components and repetitive description is omitted.

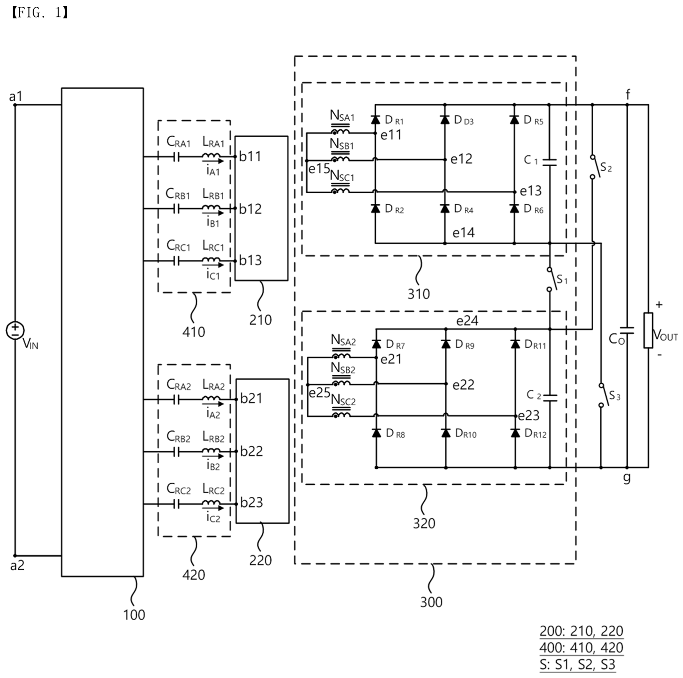

FIG. 1 illustrates a resonant converter according to an embodiment of the present disclosure.

Referring to FIG. 1, a resonant converter 10 according to an embodiment of the present disclosure may include a half-bridge inverter, a resonant inductor, a resonant capacitor, a transformer, and a rectifier stage.

The primary side of the resonant converter 10 according to an embodiment of the present disclosure is configured as a three-phase LLC converter and may include two three-phase inverters. The three-phase LLC inverter may be configured by connecting three single-phase half-bridge inverters in parallel. The phases may be defined as phase A, phase B, and phase C. The three-phase LLC converter may have different configurations on both the primary side and the secondary side. In the three-phase LLC converter, three primary-side transformers may be connected to each other on both the primary side and the secondary side. The three transformers of the three-phase LLC converter may be connected in a Y configuration or a delta configuration well known in the art.

In detail, the primary side of the resonant converter 10 according to an embodiment of the present disclosure may be composed of a three-phase inverter 1 and a three-phase inverter 2, and the secondary side may be composed of a three-phase synchronous rectifier 1 and a three-phase synchronous rectifier 2. For convenience, they may be defined as 3P INV1, 3P INV2, 3P RECT1, and 3P RECT2 in order. A three-phase LLC converter includes three single-phase half-bridge inverters connected in parallel on the primary side, and may be composed of a three-phase full-bridge rectifier stage on the secondary side, in which the connection structure is changed by relays S1, S2, and S3. In this case, the phases may be defined as phase A, phase B, and phase C. Transformers of respective phases of the three-phase LLC converter are connected in series on the primary side and are connected in a Y configuration on the secondary side, and may be connected in a delta configuration as necessary. Driving signals of A-, B-, and C-phase inverters of the LLC converter each have a duty ratio of 0.5 and may be phase-shifted by 120 degrees. An output voltage is controlled by controlling the frequency of the drive signals.

In an embodiment, the 3P INV1 and the 3P INV2 may be connected in parallel on the primary side. The 3P RECT1 and the 3P RECT2 may be configured such that the currents of phases A, B, and C are shared in a full-bridge configuration by a Y connection of the transformer secondary-side windings. Since resonant currents of the phases are phase-shifted by 120 degrees and transferred, even though a high output current is provided, the magnitude of current ripple flowing through a capacitor can be reduced. Further, transformer primary-side windings of the same phase are connected in series, so that current distribution is possible even though tolerances occur in the 3P INV1 and the 3P INV2, and secondary-side windings are connected in a Y or Δ configuration, so that current distribution is possible even though tolerances occur in phases A, B, and C.

In an embodiment, only three relays are applied to an output stage to provide a wide output voltage range, and low-voltage operation can be implemented by changing primary-side drive signals.

In detail, the resonant converter 10 may include an inverter section 100, a transformer section 200, a rectifier section 300, a resonant circuit 400, and a relay section S.

The inverter section 100 may include a pair of inverters. The inverters may be connected in parallel.

The inverter section 100 may include a single-phase half-bridge inverter.

The transformer section 200 may include first and second transformer sections 210 and 220. The transformer section 200 may be configured as a primary-side transformer section, and the rectifier section 300 may include a secondary-side transformer section. The resonant circuit 400 may include a first and second resonant circuits 410 and 420.

The input power source Vin may be connected between a first input-side node a1 and a second input-side node a2. Further, the inverter section 100 may be connected between the first input-side node a1 and the second input-side node a2. Accordingly, the input power source Vin may be connected to an input side of the inverter section 100. Further, the first and second resonant circuits 410 and 420 may be connected to the inverter section 100. An output side of the inverter section 100 may be connected to each of the first and second resonant circuits 410 and 420. The output side of the inverter section 100 may be connected to one side of each of the first and second resonant circuits 410 and 420. The transformer section 200 may be connected to the resonant circuit 400. The transformer section 200 may be connected to another side of the resonant circuit 400. The transformer section 200 may be connected to another side of each of the first and second resonant circuits 410 and 420.

The first resonant circuit 410 may include a 1-1 resonant capacitor CRA1 and a 1-1 resonant inductor LRA1 that are connected in series between the inverter section 100 and the first transformer section 210. One side of the 1-1 resonant capacitor CRA1 may be connected to the inverter section 100, and another side may be connected to the 1-1 resonant inductor LRA1. Further, one side of the 1-1 resonant inductor LRA1 may be connected to the 1-1 resonant capacitor CRA1, and another side may be connected to the first transformer section 210. Further, the first resonant circuit 410 may further include a 1-2 resonant capacitor CRB1 and a 1-2 resonant inductor LRB1 that are connected in series between the inverter section 100 and the first transformer section 210. One side of the 1-2 resonant capacitor CRB1 may be connected to the inverter section 100, and another side may be connected to the 1-2 resonant inductor LRB1. Further, one side of the 1-2 resonant inductor LRB1 may be connected to the 1-2 resonant capacitor CRB1, and another side may be connected to the first transformer section 210. Further, the first resonant circuit 410 may further include a 1-3 resonant capacitor CRC1 and a 1-3 resonant inductor LRC1 connected in series between the inverter section 100 and the first transformer section 210. One side of the 1-3 resonant capacitor CRC1 may be connected to the inverter section 100, and another side may be connected to the 1-3 resonant inductor LRC1. Further, one side of the 1-3 resonant inductor LRC1 may be connected to the 1-3 resonant capacitor CRC1, and another side may be connected to the first transformer section 210.

The second resonant circuit 420 may include a 2-1 resonant capacitor CRA2 and a 2-1 resonant inductor LRA2 connected in series between the inverter section 100 and the first transformer section 210. One side of the 2-1 resonant capacitor CRA2 may be connected to the inverter section 100, and another side may be connected to the 2-1 resonant inductor LRA2. Further, one side of the 2-1 resonant inductor LRA2 may be connected to the 2-1 resonant capacitor CRA2, and another side may be connected to the first transformer section 210. Further, the second resonant circuit 420 may further include a 2-2 resonant capacitor CRB2 and a 2-2 resonant inductor LRB2 connected in series between the inverter section 100 and the first transformer section 210. One side of the 2-2 resonant capacitor CRB2 may be connected to the inverter section 100, and another side may be connected to the 2-2 resonant inductor LRB2. Further, one side of the 2-2 resonant inductor LRB2 may be connected to the 2-2 resonant capacitor CRB2, and another side may be connected to the first transformer section 210. Further, the second resonant circuit 420 may further include a 2-3 resonant capacitor CRC2 and a 2-3 resonant inductor LRC2 connected in series between the inverter section 100 and the first transformer section 210. One side of the 2-3 resonant capacitor CRC2 may be connected to the inverter section 100, and another side may be connected to the 2-3 resonant inductor LRC2. Further, one side of the 2-3 resonant inductor LRC2 may be connected to the 2-3 resonant capacitor CRC2, and another side may be connected to the first transformer section 210.

The first transformer section 210 may be composed of 1-1 to 1-3 primary-side windings, and the second transformer section 220 may be composed of 2-1 to 2-3 primary-side windings.

The rectifier section 300 may be connected between a first output terminal f and a second output terminal g. The output side of the rectifier section 300 may be connected between the first output terminal f and the second output terminal g. The resonant converter 10 according to an embodiment of the present disclosure may further include an output capacitor Co. The output capacitor Co may be connected to the output side of the rectifier section 300. The output capacitor Co may be connected between the first output terminal f and the second output terminal g. The output capacitor Co may be connected in parallel with a load side. The load side may be connected between the first output terminal f and the second output terminal g. The voltage across the load side is defined as an output voltage Vout.

The rectifier section 300 may include first and second rectifier sections 310 and 320. The first and second rectifier sections 310 and 320 may be connected in parallel. The rectifier section 300 may include first and second capacitors C1 and C2. The first capacitor C1 may be connected to the first rectifier section 310 in parallel, and the second capacitor C2 may be connected to the second rectifier section 320 in parallel.

The relay section S may include first to third relays S1, S2, and S3. The first to third relays S1, S2, and S3 may be connected between the first and second rectifier sections 310 and 320.

The rectifier section 300 may be a full-bridge rectifier connected to the secondary-side windings of each phase. The first and second rectifier sections 310 and 320 of the rectifier section 300 may be configured such that the currents of phases A, B, and C are shared in a full-bridge configuration by a Y connection of secondary-side windings.

The first rectifier section 310 may include a first diode and a first secondary-side transformer section. The first diode may include a 1-1 diode DR1, a 1-2 diode DR2, a 1-3 diode DR3, a 1-4 diode DR4, a 1-5 diode DR5, and a 1-6 diode DR6.

A cathode terminal of the 1-1 diode DR1 may be connected to the first output terminal f, and an anode terminal may be connected to a 1-1 rectifying terminal e11. A cathode terminal of the 1-3 diode DR3 may be connected to the first output terminal f, and an anode terminal may be connected to a 1-2 rectifying terminal e12. A cathode terminal of the 1-5 diode DR5 may be connected to the first output terminal f, and an anode terminal may be connected to a 1-3 rectifying terminal e13. A cathode terminal of the 1-2 diode DR2 may be connected to the 1-1 rectifying terminal e11, and an anode terminal may be connected to a 1-4 rectifying terminal e14. A cathode terminal of the 1-4 diode DR4 may be connected to the 1-2 rectifying terminal e12, and an anode terminal may be connected to the 1-4 rectifying terminal e14. A cathode terminal of the 1-6 diode DR6 may be connected to the 1-3 rectifying terminal e13, and an anode terminal may be connected to the 1-4 rectifying terminal e14. Here, when the third relay S3 is turned on, the 1-4 rectifying terminal e14 may be connected to the second output terminal g through the third relay S3.

The first secondary-side transformer section of the first rectifier section 310 may include a 1-1 secondary-side winding NSA1, a 1-2 secondary-side winding NSB1, and a 1-3 secondary-side winding NSC1. The 1-1 secondary-side winding NSA1 may be connected between the 1-1 rectifying terminal e11 and the 1-5 rectifying terminal e15, the 1-2 secondary-side winding NSB1 may be connected between the 1-2 rectifying terminal e12 and the 1-5 rectifying terminal e15, and the 1-3 secondary-side winding NSC1 may be connected between the 1-3 rectifying terminal e13 and the 1-5 rectifying terminal e15. Further, the polarity dots of the 1-1 secondary-side winding NSA1, the 1-2 secondary-side winding NSB1, and the 1-3 secondary-side winding NSC1 may correspond to the 1-5 rectifying terminal e15.

The second rectifier section 320 may include a second diode and a second secondary-side transformer section. The second diode may include a 2-1 diode DR7, a 2-2 diode DR8, a 2-3 diode DR9, a 2-4 diode DR10, a 2-5 diode DR11, and a 2-6 diode DR12.

A cathode terminal of the 2-1 diode DR7 may be connected to a 2-4 rectifying terminal e24, and an anode terminal may be connected to a 2-1 rectifying terminal e21. A cathode terminal of the 2-3 diode DR9 may be connected to the 2-4 rectifying terminal e24, and an anode terminal may be connected to a 2-2 rectifying terminal e22. A cathode terminal of the 2-5 diode DR11 may be connected to the 2-4 rectifying terminal e24, and an anode terminal may be connected to a 2-3 rectifying terminal e23. A cathode terminal of the 2-2 diode DR8 may be connected to the 2-1 rectifying terminal e21, and an anode terminal may be connected to the second output terminal g. A cathode terminal of the 2-4 diode DR10 may be connected to the 2-2 rectifying terminal e22, and an anode terminal may be connected to the second output terminal g. A cathode terminal of the 2-6 diode DR12 may be connected to the 2-3 rectifying terminal e23, and an anode terminal may be connected to the second output terminal g. Here, when the second relay S2 is turned on, the 2-4 rectifying terminal e24 may be connected to the first output terminal f through the second relay S2.

The second secondary-side transformer section of the second rectifier section 320 may include a 2-1 secondary-side winding NSA2, a 2-2 secondary-side winding NSB2, and a 2-3 secondary-side winding NSC2. The 2-1 secondary-side winding NSA2 may be connected between the 2-1 rectifying terminal e21 and the 2-5 rectifying terminal e25, the 2-2 secondary-side winding NSB2 may be connected between the 2-2 rectifying terminal e22 and the 2-5 rectifying terminal e25, and the 2-3 secondary-side winding NSC2 may be connected between the 2-3 rectifying terminal e23 and the 2-5 rectifying terminal e25. Further, the polarity dots of the 2-1 secondary-side winding NSA2, the 2-2 secondary-side winding NSB2, and the 2-3 secondary-side winding NSC2 may correspond to the 2-5 rectifying terminal e25.

Meanwhile, the first relay S1 may be connected between the 1-4 rectifying terminal e14 and the 2-4 rectifying terminal e24, the second relay S2 may be connected between the first output terminal f and the 2-4 rectifying terminal e24, and the third relay S3 may be connected between the 1-4 rectifying terminal e14 and the second output terminal g.

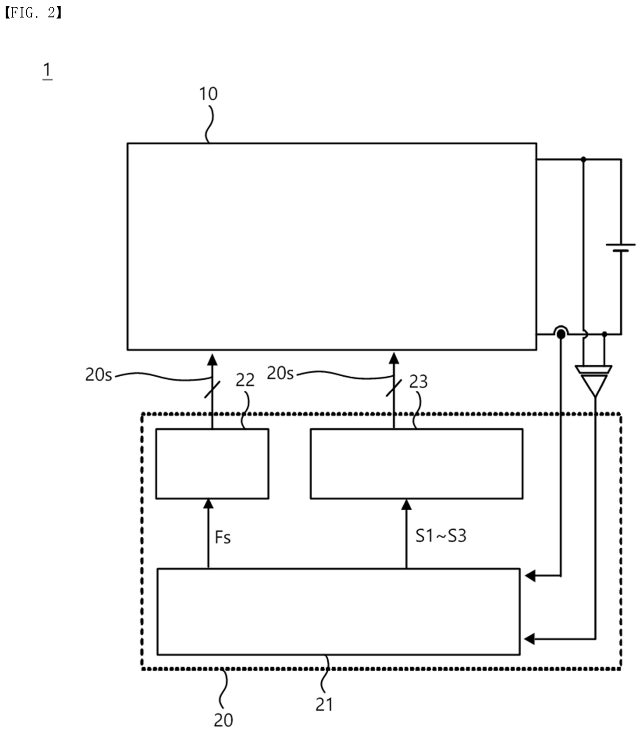

FIG. 2 is a block diagram of a power conversion device according to an embodiment of the present disclosure.

Referring to FIGS. 1 and 2, a power conversion device 1 may include a resonant converter 10 and a control unit 20.

The control unit 20 can determine whether a battery to be charged is a high-voltage battery having a voltage equal to or higher than a preset first reference value, a medium-voltage battery having a voltage less than the first reference value and higher than a second reference value lower than the first reference value, or a low-voltage battery having a voltage equal to or less than the second reference value, and can control required output voltage and current. The control unit 20 can sense a voltage and a current of a battery, change an operating frequency FS to adjust output voltage and current, and determine a drive signal of the relay section S. After determining whether the battery is a high-voltage battery, a medium-voltage battery, or a low-voltage battery, the control unit can control a phase difference between inverter drive signals Q11~Q61 and Q12~Q62 differently.

The control unit 20 can control the resonant converter 10 such that inverter drive signals of the phases A, B, and C of the LLC converter each have a duty ratio of 0.5. Accordingly, the inverter drive signals may be phase-shifted by 120 degrees. Further, control of an output voltage by the control unit 20 may be performed using frequency control of drive signals.

The control unit 20 may include a voltage and current control unit 21, a first control signal generation unit 22, and a second control signal generation unit 23. The voltage and current control unit 21 can determine the type of a battery to be charged (high-voltage, medium-voltage, or low-voltage) and can set the output voltage and current required for charging. The voltage and current control unit 21 can determine whether a battery is a high-voltage battery or a low-voltage battery by measuring the voltage of the battery. The determination result can be used to set the range of an output voltage of a charger. The voltage and current control unit 21 can provide appropriate voltage and current by adjusting an operating frequency Fs of the charger in accordance with the set output voltage and current. The voltage and current control unit 21 can determine operating conditions in accordance with characteristics of a battery to be charged and transmit the operating conditions to the first control signal generation unit 22 and the second control signal generation unit 23.

The first control signal generation unit 22 can generate drive signals (PWM signals) of a plurality of switching elements in the inverter section 100 in accordance with information received from the voltage and current control unit 21.

When a battery is determined to be a high-voltage battery by a battery determination unit, the first control signal generation unit 22 can adjust the phases of switching signals of the resonant converter 10 and the second control signal generation unit 23 can control the driving of the relay section S such that the first and second rectifier sections 310 and 320 are connected in series. Accordingly, a high output voltage can be provided.

Further, when a battery is determined to be a medium-voltage battery by the battery determination unit, the second control signal generation unit 23 can control the driving of the relay section S such that the first and second rectifier sections 310 and 320 are connected in parallel. Accordingly, a medium output voltage can be provided.

When a battery is determined to be a low-voltage battery by the battery determination unit, the first control signal generation unit 22 can adjust the phases of switching signals differently such that three half-bridge inverters of the A, B, and C phases of the 3P INV1 and the 3P INV2 are connected in parallel, and accordingly, a low output voltage can be provided.

That is, the voltage and current control unit 21 can detect characteristics of a battery to be charged (such as a voltage range), set output voltage and current corresponding thereto, and transmit information on the set output voltage and current to the first control signal generation unit 22. Further, the first control signal generation unit 22 generates PWM signals suitable for the plurality of switching elements in the inverter section 100 on the basis of the received information on the output voltage and current, whereby the plurality of switching elements can be controlled. Further, the voltage and current control unit 21 can determine a relay drive signal and provide the relay drive signal to the second control signal generation unit 23. Further, the second control signal generation unit 23 can output drive signals for driving the first to third relays S1, S2, and S3 of the relay section S on the basis of the determined relay drive signal.

The signals cause the secondary-side windings to be connected in series or in parallel such that high-voltage, medium-voltage, or low-voltage charging is enabled.

Meanwhile, although the control unit 20 is illustrated as sensing the voltage and the current of a battery, the present disclosure is not limited thereto, and any method having a purpose of reducing an operating frequency range over a wide output voltage range during operation of the resonant converter 10, such as battery voltage, battery current, an operating state of the resonant converter 10, or communication with the battery, may be used.

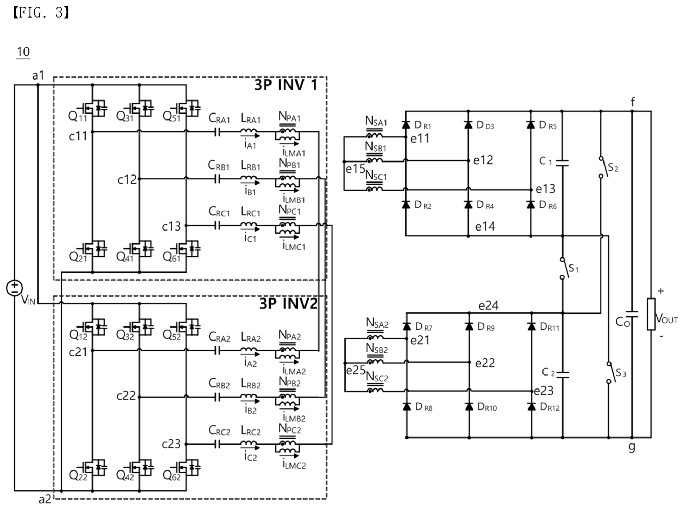

FIG. 3 is a circuit diagram of a resonant converter according to an embodiment of the present disclosure, in which three transformers of a three-phase inverter have a Y-connection configuration.

Referring to FIGS. 1 and 3, the inverter section 100 may include first and second inverter sections 3P INV1 and 3P INV2. The first and second inverter sections 3P INV1 and 3P INV2 may be connected in parallel.

The first inverter section 3P INV1 may include 1-1 to 1-6 switching elements Q11, Q21, Q31, Q41, Q51, and Q61.

The 1-1 switching element Q11 may be connected between a first input-side node a1 and a 1-1 inverter node c11, the 1-3 switching element Q31 may be connected between the first input-side node a1 and a 1-2 inverter node c12, the 1-5 switching element Q51 may be connected between the first input-side node a1 and a 1-3 inverter node c13, the 1-2 switching element Q21 may be connected between the 1-1 inverter node c11 and a second input-side node a2, the 1-4 switching element Q41 may be connected between the 1-2 inverter node c12 and the second input-side node a2, and the 1-6 switching element Q61 may be connected between the 1-3 inverter node c13 and the second input-side node a2. Further, drain terminals of the 1-1, 1-3, and 1-5 switching elements Q11, Q31, and Q51 may be connected to the first input-side node a1. Further, the 1-1 resonant capacitor CRA1 of the first resonant circuit 410 may be connected between the 1-1 inverter node c11 and the 1-1 resonant inductor LRA1, the 1-2 resonant capacitor CRB1 may be connected between the 1-2 inverter node c12 and the 1-2 resonant inductor LRB1, and the 1-3 resonant capacitor CRC1 may be connected between the 1-3 inverter node c13 and the 1-3 resonant inductor LRC1.

Further, the second inverter section 3P INV2 may include 2-1 to 2-6 switching elements Q12, Q22, Q32, Q42, Q52, and Q62.

The 2-1 switching element Q12 may be connected between the first input-side node a1 and a 2-1 inverter node c21, the 2-3 switching element Q32 may be connected between the first input-side node a1 and a 2-2 inverter node c22, the 2-5 switching element Q52 may be connected between the first input-side node a1 and a 2-3 inverter node c23, the 2-2 switching element Q22 may be connected between the 2-1 inverter node c21 and the second input-side node a2, the 2-4 switching element Q42 may be connected between the 2-2 inverter node c22 and the second input-side node a2, and the 2-6 switching element Q62 may be connected between the 2-3 inverter node c23 and the second input-side node a2. Further, drain terminals of the 2-1, 2-3, and 2-5 switching elements Q12, Q32, and Q52 may be connected to the first input-side node a1. Further, the 2-1 resonant capacitor CRA2 of the second resonant circuit 420 may be connected between the 2-1 inverter node c21 and the 2-1 resonant inductor LRA2, the 2-2 resonant capacitor CRB2 may be connected between the 2-2 inverter node c22 and the 2-2 resonant inductor LRB2, and the 2-3 resonant capacitor CRC2 may be connected between the 2-3 inverter node c23 and the 2-3 resonant inductor LRC2.

Further, the first transformer section 210 may include a 1-1 primary-side winding NPA1, a 1-2 primary-side winding NPB1, and a 1-3 primary-side winding NPC1. Further, the second transformer section 220 may include a 2-1 primary-side winding NPA2, a 2-2 primary-side winding NPB2, and a 2-3 primary-side winding NPC2.

The 1-1 primary-side winding NPA1 may be connected between the 1-1 resonant inductor LRA1 and the 2-1 primary-side winding NPA2, the 1-2 primary-side winding NPB1 may be connected between the 1-2 resonant inductor LRB1 and the 2-2 primary-side winding NPB2, and the 1-3 primary-side winding NPC1 may be connected between the 1-3 resonant inductor LRC1 and the 2-3 primary-side winding NPC2. Further, a connection point between the 1-1 primary-side winding NPA1 and the 1-1 resonant inductor LRA1 may correspond to the polarity dot of the 1-1 primary-side winding NPA1, a connection point between the 1-2 primary-side winding NPB1 and the 1-2 resonant inductor LRB1 may correspond to the polarity dot of the 1-2 primary-side winding NPB1, and a connection point between the 1-3 primary-side winding NPC1 and the 1-3 resonant inductor LRC1 may correspond to the polarity dot of the 1-3 primary-side winding NPC1.

The 2-1 primary-side winding NPA2 may be connected between the 2-1 resonant inductor LRA2 and the 1-1 primary-side winding NPA1, the 2-2 primary-side winding NPB2 may be connected between the 2-2 resonant inductor LRB2 and the 1-2 primary-side winding NPB1, and the 2-3 primary-side winding NPC2 may be connected between the 2-3 resonant inductor LRC2 and the 1-3 primary-side winding NPC1. Further, a connection point between the 2-1 primary-side winding NPA2 and the 2-1 resonant inductor LRA2 may correspond to the polarity dot of the 2-1 primary-side winding NPA2, a connection point between the 2-2 primary-side winding NPB2 and the 2-2 resonant inductor LRB2 may correspond to the polarity dot of the 2-2 primary-side winding NPB2, and a connection point between the 2-3 primary-side winding NPC2 and the 2-3 resonant inductor LRC2 may correspond to the polarity dot of the 2-3 primary-side winding NPC2.

Meanwhile, the first inverter section 3P INV1 and the first resonant circuit 410 may be defined as a first three-phase converter (3P LLC1), and the second inverter section 3P INV2 and the second resonant circuit 420 may be defined as a second three-phase converter (3P LLC2).

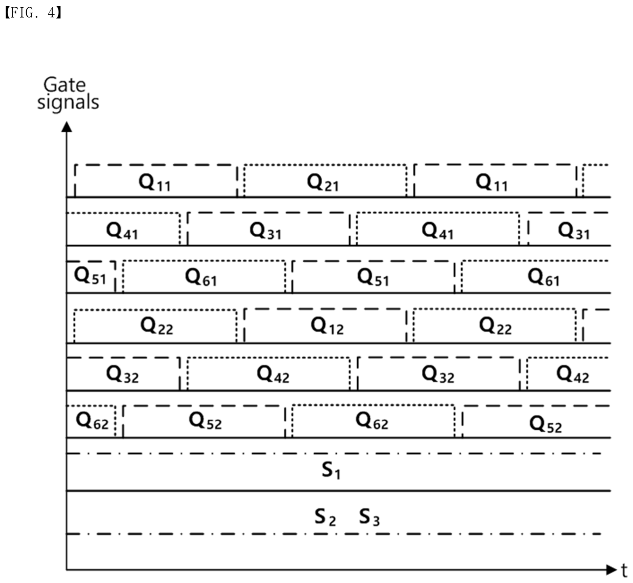

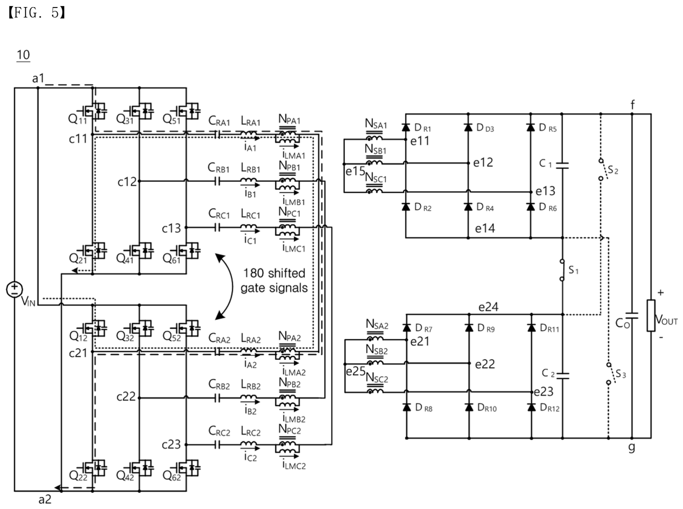

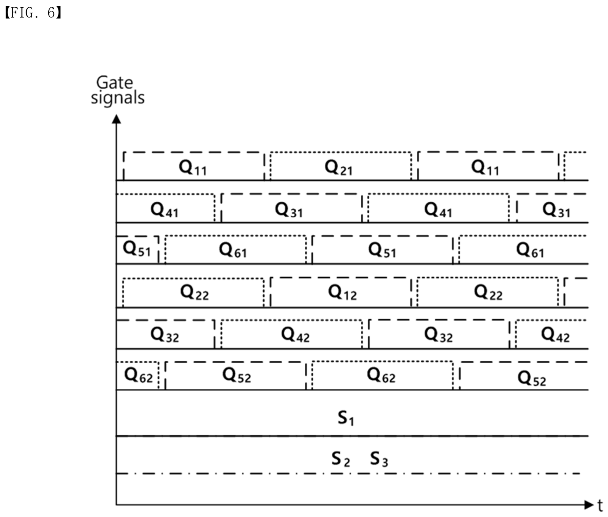

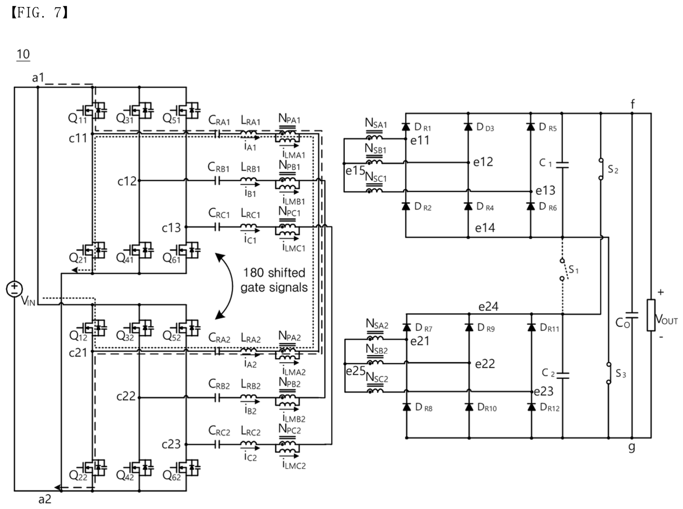

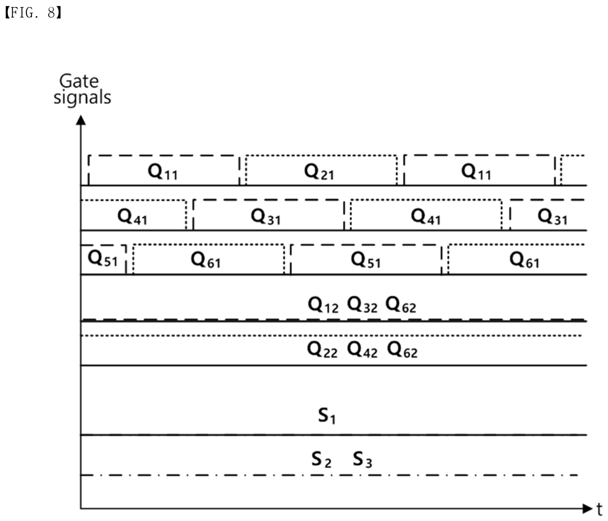

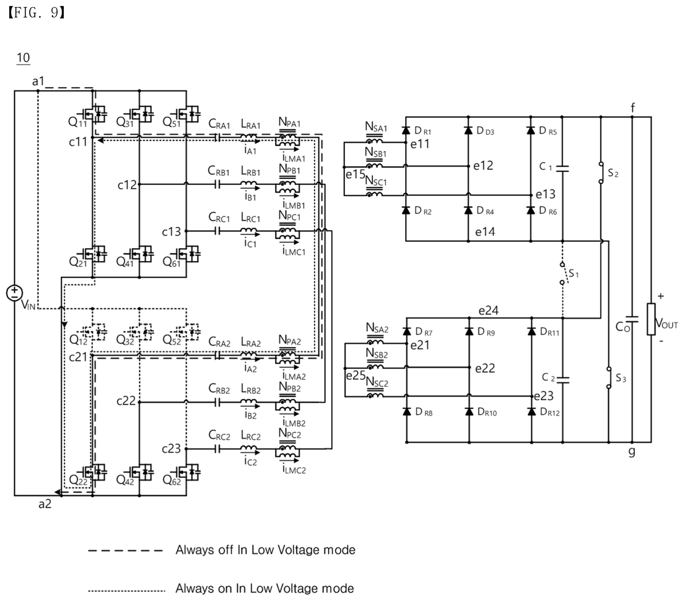

FIG. 4 illustrates switching control signals over time by a first control signal generation unit and relay control signals over time by a second control signal generation unit during high-voltage battery charging, FIG. 5 illustrates secondary-side windings connected in series during high-voltage battery charging, FIG. 6 illustrates switching control signals over time by the first control signal generation unit and relay control signals over time by the second control signal generation unit during medium-voltage battery charging, and FIG. 7 illustrates secondary-side windings connected in parallel during medium-voltage battery charging. FIG. 8 illustrates switching control signals over time by the first control signal generation unit and relay control signals over time by the second control signal generation unit during low-voltage battery charging and FIG. 9 illustrates secondary-side windings connected in parallel during low-voltage battery charging.

### - During High-Voltage Battery Charging

Signals of the PWM generation unit during high-voltage battery charging are illustrated. For convenience of description, the frequency of the PWM signal is omitted for convenience, and upper switch drive signals of all half-bridge inverter legs are indicated by dotted lines with large dots, lower switch drive signals are indicated by dotted lines with small dots, relay signals are indicated by single-dotted chain lines. Switch drive signals Q11, Q31, and Q51 represent upper switch drive signals for phases A, B, and C of the 3P INV1 illustrated in FIG. 3, and Q21, Q41, and Q61 represent lower switch drive signals for the phases A, B, and C of the 3P INV1. Further, switch drive signals Q12, Q32, and Q52 represent upper switch drive signals for phases A, B, and C of the 3P INV2 illustrated in FIG. 3, Q22, Q42, and Q62 represent lower switch drive signals for the phases A, B, and C, and S1, S2, and S3 represent drive signals of relays. As illustrated in FIG. 4, switch drive signals for the phases A, B, and C are phase-shifted by 120 degrees. Further, it can be seen that switch drive signals for the 3P INV1 and the 3P INV2 are applied such that signals of the upper switches and signals of the lower switches corresponding to the respective phases are phase-shifted by 180 degrees in 3P INV1 and 3P INV2. Further, the first relay S1 is turned on, and the second and third relays S2 and S3 are turned off, so that the first and second rectifier sections 310 and 320 are connected in series.

That is, the signals of the respective phases of the 3P INV1 and the 3P INV2 are applied with a phase difference of 180 degrees, so that the A-phase half-bridge legs of the 3P INV1 and the 3P INV2 can operate as a full-bridge inverter. Accordingly, the primary side operates equivalently to three full-bridge inverters of the phases A, B, and C connected in parallel. Further, in the first and second rectifier sections 310 and 320, the combination of diodes that conduct changes, depending on the direction of the resonant current flowing through the primary-side transformer sections of the 3P INV1 and the 3P INV2. As a result, the first and second rectifier sections 310 and 320 can operate as a single full-bridge rectifier stage driven by the currents of the phases transferred from the 3P INV1 and the 3P INV2. During high-voltage battery charging, the first relay S1 is turned on, so that the first and second rectifier sections 310 and 320 are connected in series, whereby a high output voltage can be provided.

### - During Medium-Voltage Battery Charging

As illustrated in FIG. 6, the signals of the phases of the 3P INV1 and the 3P INV2 are the same as those illustrated in FIG. 4, so that the operations of the 3P INV1 and the 3P INV2 and the first and second rectifier sections 310 and 320 are the same as those illustrated in FIG. 5. However, the first relay S1 may be turned off, and the second and third relays S2 and S3 may be turned on. Accordingly, the first and second rectifier sections 310 and 320 are connected in parallel, so that a medium output voltage can be provided.

### - During Low-Voltage Battery Charging

As illustrated in FIG. 8, the signals of the phases of the 3P INV1 are PWM signals the same as those used during high-voltage and medium-voltage battery charging, and the upper switches of the half-bridges of the 3P INV2 are always turned off, and the lower switches are always turned on. Accordingly, as illustrated in FIG. 9, the A-phase half-bridge legs of the 3P INV1 and the 3P INV2 operate as a half-bridge inverter. That is, the primary side operates equivalently to three half-bridge inverters of the phases A, B, and C connected in parallel. Further, the first relay S1 may be turned off, and the second and third relays S2 and S3 may be turned on. Accordingly, the first and second rectifier sections 310 and 320 are connected in parallel, so that a low output voltage can be provided.

As described above, a control method of an embodiment can achieve a wide output voltage range by adding only three relays while maintaining a current distribution characteristic robust to tolerances of a three-phase LLC converter and its small output capacitor current ripple.

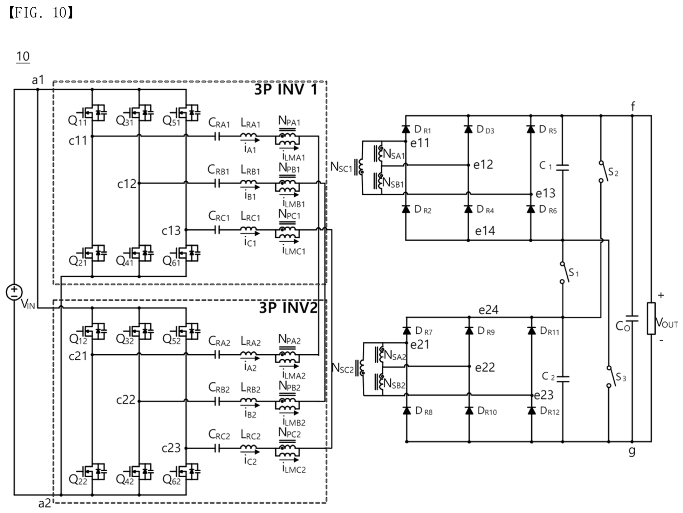

FIG. 10 illustrates a resonant converter according to various embodiments of the present disclosure.

The resonant converter 10 according to various embodiments of the present disclosure illustrated in FIG. 10 may be in a configuration in which the secondary-side transformer sections are connected in delta (Δ).

In detail, the first secondary-side transformer section of the first rectifier section 310 may include a 1-1 secondary-side winding NSA1, a 1-2 secondary-side winding NSB1, and a 1-3 secondary-side winding NSC1. The 1-1 secondary-side winding NSA1 may be connected between the 1-1 rectifying terminal e11 and the 1-2 rectifying terminal e12, the 1-2 secondary-side winding NSB1 may be connected between the 1-2 rectifying terminal e12 and the 1-3 rectifying terminal e13, and the 1-3 secondary-side winding NSC1 may be connected between the 1-1 rectifying terminal e11 and the 1-3 rectifying terminal e13. Further, the polarity point of the 1-1 secondary-side winding NSA1 may correspond to the 1-1 rectifying terminal e11, the polarity point of the 1-2 secondary-side winding NSB1 may correspond to the 1-2 rectifying terminal e12, and the polarity point of the 1-3 secondary-side winding NSC1 may correspond to the 1-3 rectifying terminal e13.

The second secondary-side transformer section of the second rectifier section 320 may include a 2-1 secondary-side winding NSA2, a 2-2 secondary-side winding NSB2, and a 2-3 secondary-side winding NSC2. The 2-1 secondary-side winding NSA2 may be connected between the 2-1 rectifying terminal e21 and the 2-2 rectifying terminal e22, the 2-2 secondary-side winding NSB2 may be connected between the 2-2 rectifying terminal e22 and the 2-3 rectifying terminal e23, and the 2-3 secondary-side winding NSC2 may be connected between the 2-1 rectifying terminal e21 and the 2-3 rectifying terminal e23. Further, the polarity point of the 2-1 secondary-side winding NSA2 may correspond to the 2-1 rectifying terminal e21, the polarity point of the 2-2 secondary-side winding NSB2 may correspond to the 2-2 rectifying terminal e22, and the polarity point of the 2-3 secondary-side winding NSC2 may correspond to the 2-3 rectifying terminal e23.

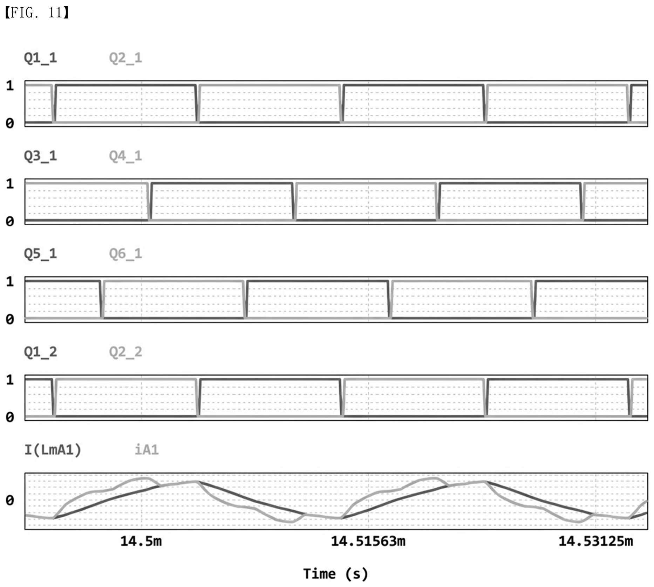

FIGS. 11 to 17 illustrate main waveforms according to simulation of the present disclosure, from which a robust current distribution characteristic and a wide output voltage range of a three-phase LLC converter can be confirmed without a separate current balancing control.

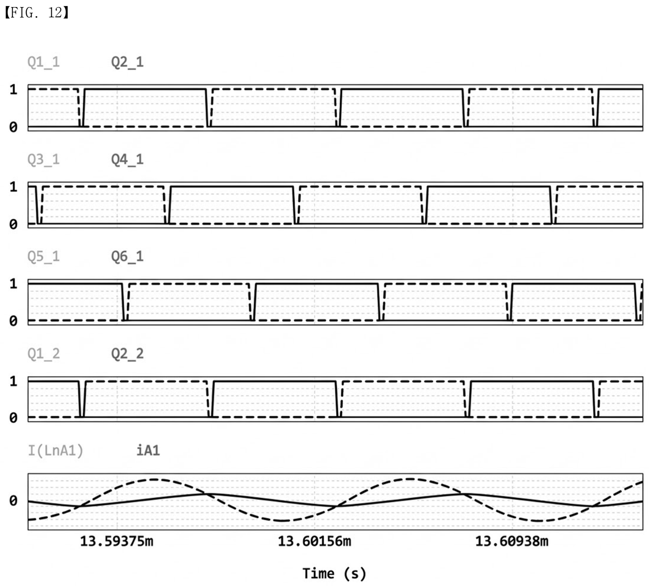

FIG. 11 illustrates main waveforms when an output voltage is 1000 V during high-voltage battery charging and FIG. 12 illustrates main waveforms when an output voltage is 600 V during high-voltage battery charging.

Referring to FIGS. 3, 11, and 12, as simulation results during high-voltage battery charging, waveforms of switch gate signals of the 3P INV1, A-phase gate signals of the 3P INV2, relay control signals, and resonant current and magnetizing current can be seen. It can be seen that the gate signals of the phases are phase-shifted by 120 degrees, and the gate signals of the 3P INV1 and the 3P INV2 are phase-shifted by 180 degrees. Further, the first relay S1 is turned on and the second and third relays S2 and S3 are turned off, so that the first and second rectifier sections 310 and 320, which are secondary-side rectifier stages, are connected in series, whereby high-voltage battery charging is enabled. FIG. 11 illustrates waveforms at an input of 1000 V and an output of 1000 V, from which it can be seen that the LLC converter operates in the below region. FIG. 12 illustrates waveforms at an input of 840 V and an output of 600 V, from which it can be seen that the LLC converter operates at the resonance point. During high-voltage battery charging, the inverter 100 operates as a full-bridge inverter, and the rectifier section 300 is connected in series, so that a high-voltage output of 600 V to 1000 V can be achieved.

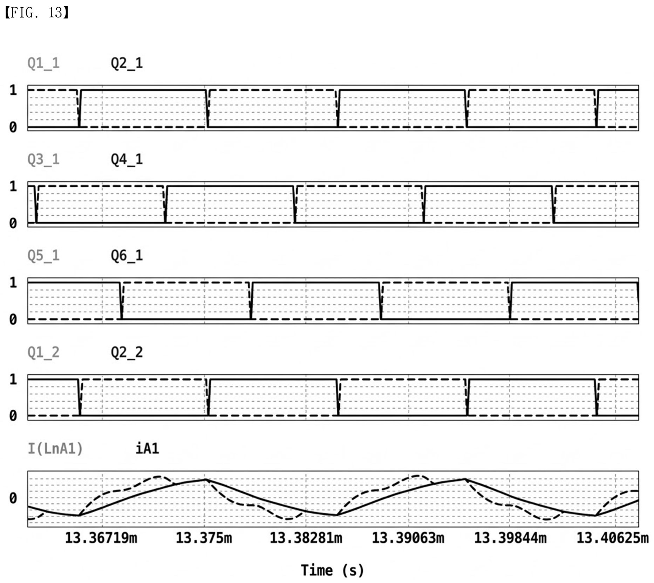

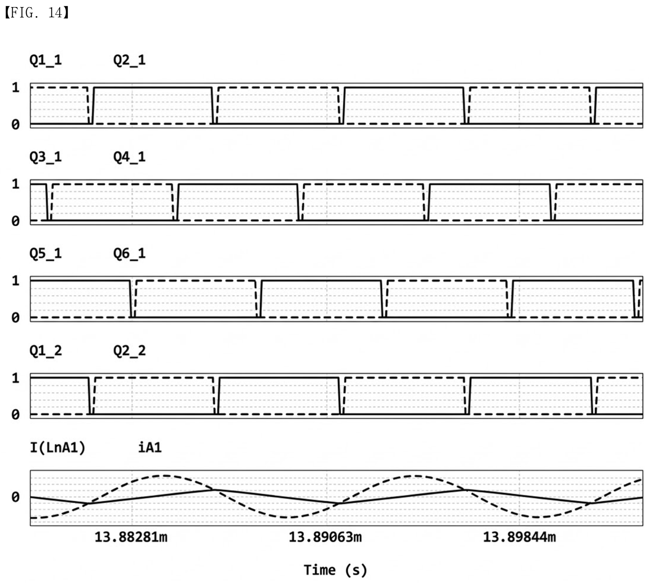

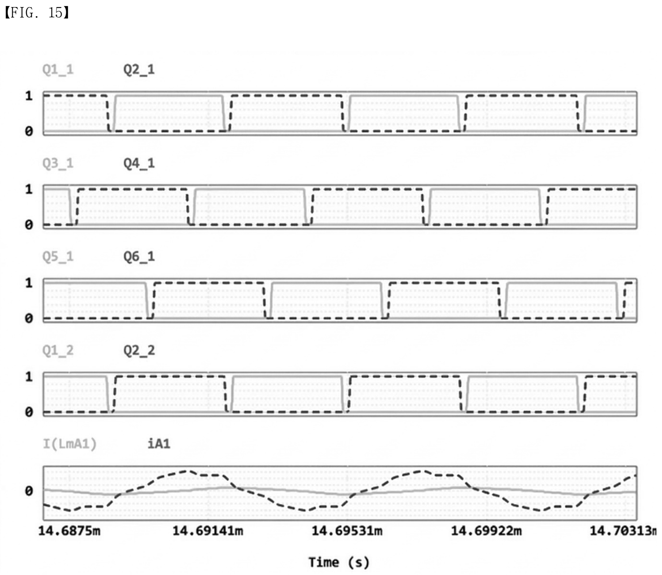

FIG. 13 illustrates main waveforms when an output voltage is 500V during medium-voltage battery charging, FIG. 14 illustrates main waveforms when an output voltage is 300V during medium-voltage battery charging, and FIG. 15 illustrates main waveforms when an output voltage is 250V during medium-voltage battery charging.

Referring to FIGS. 3, 13, and 15, as simulation results during medium-voltage battery charging, waveforms of switch gate signals of the 3P INV1, A-phase gate signals of the 3P INV2, relay control signals, and resonant current and magnetizing current can be seen. It can be seen that the gate signals of the phases are phase-shifted by 120 degrees, and the gate signals of the 3P INV1 and the 3P INV2 are phase-shifted by 180 degrees. Further, the first relay S1 is turned off and the second and third relays S2 and S3 are turned on, so that the secondary-side rectifier stages are connected in parallel, from which it can be seen that medium-voltage battery charging is enabled. FIG. 13 illustrates waveforms at an input of 1000 V and an output of 500 V, and the LLC converter operates in the below region. FIG. 14 illustrates waveforms at an input of 840 V and an output of 300 V, and the LLC converter operates at the resonant point. FIG. 15 illustrates waveforms at an input of 840 V and an output of 250 V, and the LLC converter operates at the above region. That is, during medium-voltage battery charging, the inverter 100 operates as a full-bridge inverter, and the rectifier section 300 is connected in parallel, so that a medium-voltage output of 250 V to 500 V can be achieved.

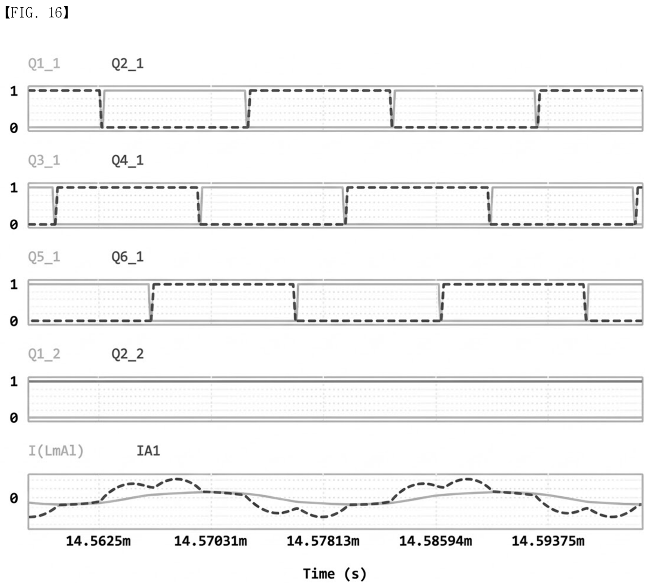

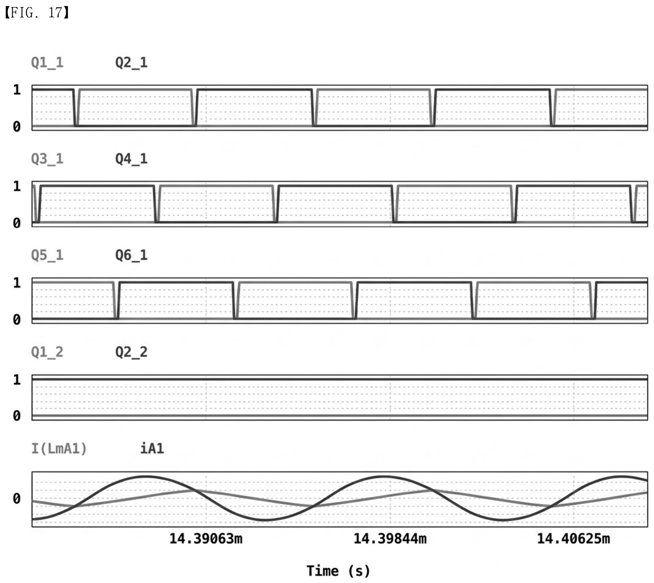

FIG. 16 illustrates main waveforms when an output voltage is 250 V during low-voltage battery charging and FIG. 17 illustrates main waveforms when an output voltage is 150 V during low-voltage battery charging.

Referring to FIGS. 3, 16, and 17, as simulation results during low-voltage battery charging, waveforms of switch gate signals of the 3P INV1, A-phase gate signals of the 3P INV2, relay control signals, and resonant current and magnetizing current can be seen. The gate signals of the phases are phase-shifted by 120 degrees. The upper switch gate signals of the 3P INV2 are always turned off and the lower switch gate signals are turned on, so that the 3P INV1 and the 3P INV2 operate as a half-bridge inverter. Further, the first relay S1 is turned off and the second and third relays S2 and S3 are turned on, so that the first and second rectifier sections 310 and 320, which are secondary-side rectifier stages, are connected in parallel, from which it can be seen that low-voltage battery charging is enabled. FIG. 16 illustrates waveforms at an input of 1000 V and an output of 250 V, and the LLC converter operates in the below region. FIG. 17 illustrates waveforms at an input of 840 V and an output of 150 V, and the LLC converter operates at the resonant point. During low-voltage battery charging, the inverter 100 operates as a half-bridge inverter, and the rectifier section 300 is connected in parallel, from which it can be seen that a low-voltage output of 150 V to 250 V can be achieved.

Embodiments of the present disclosure described above may be implemented in the type of program instructions that can be executed through various computer components, and may be recorded on a computer-readable recording medium. The computer-readable recording medium may include program instructions, data files, and data structures individually or in combinations thereof. The program instructions that are recorded on a computer-readable recording medium may be those specifically designed and configured for the present disclosure or may be those available and known to those engaged in computer software in the art. The computer-readable recording medium includes magnetic media such as hard disks, floppy disks, and magnetic tapes, optical media such as CD-ROMs and DVDs, magneto-optical media such as floptical disks, and hardware devices specifically configured to store and execute program instructions, such as ROM, RAM, and flash memory. The program instructions include not only machine language codes made by a compiler, but also high-level language codes that can be executed by a computer using an interpreter, etc. A hardware device may be changed into one or more software modules to perform the processes according to the present disclosure, and vice versa.

Specific embodiments described herein are exemplary embodiments and do not limit the scope of the present disclosure in any way. For briefness of the specification, electronic components, control systems, and software of the related art, and other functional aspects of the system may not be described. Furthermore, wire connection and connecting members between components shown in the figures exemplarily represent functional connections and/or physical or circuit connections, and in actual devices, they may be replaced or may be shown as various additional functional connections, physical connections, or circuit connections. Further, unless stated in detail such as "necessary" and "important," they may not be necessary component for applying the present disclosure.

Although exemplary embodiments of the present disclosure were described above, it should be understood that the present disclosure may be changed and modified in various ways by those skilled in the art without departing from the spirit and scope of the present disclosure described in the following claims. Therefore, the technical scope of the present disclosure is not limited to those described in the detailed description of the specification, and should be determined by claims.

## Claims

1. A resonant converter comprising:
a first inverter and a second inverter connected in parallel with each other;
a first resonant circuit connected to the first inverter;
a second resonant circuit connected to the second inverter;
a first transformer section connected to the first resonant circuit;
a second transformer section connected to the second resonant circuit;
a first rectifier section including a first secondary-side transformer section of the first transformer section;
a second rectifier section including a second secondary-side transformer section of the second transformer section; and
a relay section configured to control series or parallel connection of the first and second rectifier sections,
wherein driving of switching elements in the first and second inverters and driving of the relay section are controlled on the basis of a voltage of a battery being charged.

2. The resonant converter of claim 1, wherein the first and second inverters are driven with a phase difference of 120 degrees between phases, so that the first and second inverters phase-shift resonant currents of the phases and transfer the phase-shifted resonant currents, thereby minimizing current ripple flowing through an output capacitor.

3. The resonant converter of claim 1, wherein the first and second secondary-side transformer sections are connected in a Y or Δ configuration.

4. The resonant converter of claim 1, wherein each of the first and second inverters includes three single-phase half-bridges connected in parallel.

5. The resonant converter of claim 4, wherein, during high-voltage battery charging, a half-bridge leg of any one phase in the first and second inverters is driven as a full-bridge inverter.

6. The resonant converter of claim 5, wherein, during high-voltage battery charging, the first and second rectifier sections are connected in series.

7. The resonant converter of claim 1, wherein, during medium-voltage battery charging, a half-bridge leg of any one phase in the first and second inverters is driven as a full-bridge inverter, and the first and second rectifier sections are connected in parallel.

8. The resonant converter of claim 1, wherein, during low-voltage battery charging, a half-bridge leg of any one phase in the first and second inverters is driven as a half-bridge inverter.

9. The resonant converter of claim 8, wherein, during low-voltage battery charging, the first and second rectifier sections are connected in parallel.

10. A power conversion device comprising:
the resonant converter of any one of claims 1 to 9; and
a control unit,
wherein the control unit determines whether a battery is a high-voltage battery, a medium-voltage battery, and a low-voltage battery by detecting a voltage and a current of the battery, and
the control unit adjusts a driving frequency of the first and second inverters and controls driving of the relay section, on the basis of the determination result.
